# EUROPÄISCHE PATENTSCHRIFT

(11) **EP 4 643 031 B1**
(45) Veröffentlichungstag und Bekanntmachung des Hinweises auf die Patenterteilung: **16.09.2026**
(21) Anmeldenummer: 23809450.2
(22) Anmeldetag: 08.11.2023
(51) Int. Cl.: F16H 57/04

(54) **GETRIEBE MIT EINEM GEHÄUSETEIL UND EINER ROHRLEITUNG**
TRANSMISSION WITH A HOUSING PART AND A PIPE
TRANSMISSION DOTÉE D'UNE PARTIE BOÎTIER ET D'UN TUYAU

(30) Priorität: 26.12.2022 CN 202211676978; 28.03.2023 DE 102023001215
(43) Veröffentlichungstag der Anmeldung: 05.11.2025
(73) Patentinhaber: SEW-EURODRIVE GmbH & Co. KG, 76646 Bruchsal (DE)
(72) Erfinder: WU, Zili, Tianjin, 300381 (CN)
(86) Internationale Anmeldenummer: PCT/EP2023/025465
(87) Internationale Veröffentlichungsnummer: WO 2024/141164

(56) Entgegenhaltungen:
- CN-U- 212 273 319
- JP-A- 2010 249 156
- US-A- 4 633 938

## Beschreibung

Die Erfindung betrifft ein Getriebe mit einem Gehäuseteil und einer Rohrleitung.

Es ist allgemein bekannt, dass ein Getriebe ein Gehäuseteil aufweist, in welchem Verzahnungsteile angeordnet sind und dessen Öffnungen mit einem Getriebedeckel verschließbar sind.

Aus der US 4 633 938 A ist als nächstliegender Stand der Technik ein Getriebe bekannt.

Aus der CN 212 273 319 U ist eine Kühlverrohrung für ein Getriebe bekannt.

Aus der JP 2010 - 249 156 A ist ein Getriebe bekannt.

Aus der US 4 633 938 A ist ein weiteres Getriebe bekannt.

Der Erfindung liegt daher die Aufgabe zugrunde, eine einfache Herstellung eines Getriebes zu ermöglichen, das eine hohe Leistung bei geringem Bauvolumen erreicht.

Erfindungsgemäß wird die Aufgabe bei dem Getriebe nach den in Anspruch 1 angegebenen Merkmalen gelöst.

Das erfindungsgemäße Getriebe weist ein Gehäuseteil und eine mit einem Adapterteil des Getriebes verbundene Rohrleitung auf, wobei das Gehäuseteil eine durchgehende, insbesondere durch die Wandung des Gehäuseteils durchgehende, Bohrung aufweist,
wobei das Getriebe ein mit dem Adapterteil verbundenes Verbindungsstück aufweist,
wobei eine Buchse einen Außengewindebereich aufweist, mit welchem die Buchse in einen Innengewindebereich der Bohrung eingeschraubt ist,
wobei die Buchse auf das Verbindungsstück aufgesteckt und/oder zwischen dem Verbindungsstück und dem Gehäuseteil angeordnet ist,
wobei das Verbindungsstück hohl ausgeführt ist und/oder eine axial durchgehende Ausnehmung aufweist,
wobei die axiale Richtung parallel zur Richtung der Schraubachse des Außengewindebereichs und/oder Innengewindebereichs ausgerichtet ist.

Von Vorteil ist dabei, dass die Rohrleitung nur mit einem Adapterteil zu verbinden ist und dieses dann durch bloßes Steckverbinden mit dem Verbindungsstück verbindbar ist. Somit muss dann das Verbindungsstück nur von außen am Gehäuseteil festgelegt werden. Die Betätigung von außen ist in einfacher Weise ermöglicht. Es muss hierzu nur eine Mutter aufgeschraubt werden, welche die Hülse an das Gehäuseteil andrückt und somit auch die Buchse von der Innenseite der Hülse an das Gehäuseteil andrückt.

Somit ist eine verbesserte Dichtigkeit erreichbar und die Buchse von der Hülse schützbar.

Daher ist die Buchse aus einem Kunststoff herstellbar und die Hülse aus einem Metall, sodass die Buchse vor äußeren mechanischen Einwirkungen geschützt ist.

Darüber hinaus ist ein Sensor in der Hülse einbringbar, mit dem eine Leckage detektierbar ist. Dabei ist entweder das Schmiermittel aus dem Innenraum des Getriebes und/oder das Kühlmittel aus der Rohrleitung zu detektieren.

Bei einer vorteilhaften Ausgestaltung ist die Buchse aus einem elastischeren Material als das Verbindungsstück ausgeführt,
insbesondere wobei die Buchse aus Kunststoff gefertigt ist und/oder das Verbindungsstück aus Metall gefertigt ist. Von Vorteil ist dabei, dass eine verbesserte Dichtigkeit erreichbar ist, da das elastischere Material ohne besonderen Aufwand verformbar ist.

Bei einer vorteilhaften Ausgestaltung beträgt der Abstand zwischen der Bohrung und dem Boden des wannenförmigen Gehäuseteils weniger als fünfzehn Prozent, insbesondere weniger als zehn Prozent, des Innendurchmessers der Bohrung. Von Vorteil ist dabei, dass ein Anschluss der untersten Lage der Rohrleitung derart tief, also ganz nahe am Boden des Gehäuseteils anordenbar ist, insbesondere sodass eine Betätigung einer Schraubverbindung mit einem Maulschlüssel nicht ausführbar ist.

Bei einer vorteilhaften Ausgestaltung beträgt der Abstand zwischen der in einen ersten, insbesondere ebenen, Wandbereich eingebrachten Bohrung und einem zum ersten Wandbereich senkrecht ausgerichteten, zweiten, insbesondere ebenen, Wandbereich des wannenförmigen Gehäuseteils, kleiner als fünfzehn Prozent, insbesondere kleiner als zehn Prozent, des Innendurchmessers der Bohrung. Von Vorteil ist dabei, dass ein Anschluss der untersten Lage der Rohrleitung derart nahe am Boden des Gehäuseteils anordenbar ist, insbesondere sodass eine Betätigung einer Schraubverbindung mit einem Maulschlüssel nicht ausführbar ist.

Erfindungsgemäß ragt das Verbindungsstück durch das Gehäuseteil, insbesondere durch die Wandung des Gehäuseteils, hindurch und/oder beidseitig aus dem Gehäuseteil, insbesondere aus der Wandung des Gehäuseteils, hervor. Von Vorteil ist dabei, dass das Anschließen der Rohrleitung und einer von außen kommenden Leitung in sehr einfacher Weise realisierbar ist.

Bei einer vorteilhaften Ausgestaltung weist das Verbindungsstück ein Innengewinde auf, in welches ein Adapterteil eingeschraubt ist,
wobei das Adapterteil einen innenkonischen Bereich aufweist, in welchem ein Ende der Rohrleitung aufgenommen ist und/oder in welches das Ende der Rohrleitung eingesteckt ist, insbesondere wobei eine Überwurfmutter auf die Außenseite des innenkonischen Bereichs des Adapterteils aufgeschraubt ist, sodass der innenkonische Bereich elastisch verformt ist, insbesondere auf das Ende der Rohrleitung aufgeschrumpft ist, insbesondere wobei die Überwurfmutter einen Dichtring oder eine Schneidklemme umgibt, welche an der Rohrleitung anliegt. Von Vorteil ist dabei, dass die Rohrleitung sehr schnell und einfach mit dem Verbindungsstück verbindbar ist, wobei eine sehr hohe Sicherheit erreichbar ist.

Bei einer vorteilhaften Ausgestaltung ragt die Buchse aus dem Gehäuseteil hervor, insbesondere an der vom Adapterteil und/oder von der Rohrleitung abgewandten Seite des Gehäuseteils,
wobei eine Hülse des Getriebes auf das Verbindungsstück aufgesteckt ist und am Gehäuseteil anliegt. Von Vorteil ist dabei, dass die Buchse mittels der Hülse schützbar ist und somit aus Kunststoff fertigbar ist.

Bei einer vorteilhaften Ausgestaltung umgibt die Hülse den aus dem Gehäuseteil hervorragenden Bereich der Buchse insbesondere radial. Von Vorteil ist dabei, dass die Buchse mechanisch schützbar ist.

Bei einer vorteilhaften Ausgestaltung umfasst in dem von der Hülse in axialer Richtung überdeckten Bereich der auf die Schraubachse bezogene, von der Hülse überdeckte Radialabstandsbereich den von der Buchse, insbesondere in dem aus dem Gehäuseteil hervorragenden Bereich der Buchse, überdeckten Radialabstandsbereich und/oder ist von diesem beabstandet. Von Vorteil ist dabei, dass die Buchse von der Hülse nach außen hin geschützt umgebbar ist.

Bei einer vorteilhaften Ausgestaltung überlappt der von der Hülse in axialer Richtung überdeckte Bereich mit dem von der Buchse in axialer Richtung überdeckten Bereich, insbesondere echt. Von Vorteil ist dabei, dass die Hülse sich weiter vom Gehäuseteil weg erstreckt als die Buchse und somit die Buchse umfasst und schützt.

Bei einer vorteilhaften Ausgestaltung ist die Hülse mit dem Verbindungsstück mittels zumindest eines ersten Schraubteils, insbesondere Gewindestifts, drehfest verbunden, wobei das erste Schraubteil in eine radial gerichtete Gewindebohrung der Hülse zumindest teilweise eingeschraubt ist und in eine radial gerichtete Vertiefung des Verbindungsstücks hineinragt. Von Vorteil ist dabei, dass die relative Lage der Hülse mit dem Verbindungsstück fixiert ist.

Bei einer vorteilhaften Ausgestaltung ist wobei ein zweites Schraubteil vorgesehen, welches in eine axial gerichtete Gewindebohrung der Hülse zumindest teilweise eingeschraubt ist und zumindest teilweise in eine axial gerichtete Gewindebohrung des Gehäuseteils eingeschraubt ist. Von Vorteil ist dabei, dass die relative Lage, insbesondere Drehlage, zum Gehäuseteil hin fixiert ist.

Bei einer vorteilhaften Ausgestaltung ist das erste Schraubteil vom zweiten Schraubteil in Umfangsrichtung beabstandet. Von Vorteil ist dabei, dass eine kompakte Ausführung ermöglicht ist und dabei trotzdem eine hohe Steifigkeit der Hülse beibehaltbar ist.

Bei einer vorteilhaften Ausgestaltung weist der aus dem Gehäuseteil hervorragende Bereich der Buchse einen Außendurchmesser auf, welcher größer als der lichte Innendurchmesser der Gewindebohrung des Gehäuseteils ist. Von Vorteil ist dabei, dass ein Hereinrutschen in die Gewindebohrung verhindert ist.

Bei einer vorteilhaften Ausgestaltung drückt eine auf einen Außengewindebereich des Verbindungsstücks aufgeschraubte Mutter des Getriebes die Hülse ans Gehäuseteil an, insbesondere sodass die Buchse ebenfalls an das Gehäuseteil angedrückt wird und elastisch verformt wird. Von Vorteil ist dabei, dass eine hohe Dichtigkeit herstellbar ist und eine einfache Herstellung sowie ein gehäusebildender Schutz für die Buchse erreichbar ist.

Bei einer vorteilhaften Ausgestaltung ist die Rohrleitung im Getriebe als zumindest zweilagige Wicklung, insbesondere ebene Wicklung und/oder Flachwicklung, angeordnet,
wobei die erste Lage der Wicklung senkrecht zur Wicklungsachse sich weiter erstreckt als die zweite Lage der Wicklung,
insbesondere wobei die erste Lage näher zum Boden des wannenförmig ausgebildeten Gehäuseteils angeordnet ist als die zweite Lage,
insbesondere sodass die von der ersten Lage umwickelte Fläche größer ist als die von der zweiten Lage umwickelte Fläche, insbesondere wobei die erste Lage zumindest zwei Windungen aufweist und die zweite Lage ebenfalls zumindest zwei Windungen aufweist. Von Vorteil ist dabei, dass einerseits ein möglichst großer Wärmestrom zur ersten Lage hinausgehend vom Boden des wannenförmigen Gehäuseteils bewirkbar ist, da die erste Lage näher als die zweite Lage am Boden des wannenförmigen Gehäuseteils angeordnet ist. Außerdem ist ein eintreibendes Verzahnungsteil oberhalb der ersten Lage vorsehbar, das somit ähnlich nahe zur ersten Lage hin anordenbar ist wie die zweite Lage, wobei die zweite Lage aber beabstandet ist vom Verzahnungsteil.

Insbesondere ist somit das von der eintreibenden Seite her bewegte Öl möglichst direkt entwärmbar. Die Beabstandung zwischen dem Verzahnungsteil und der zweiten Lage ist besonders klar erkennbar, wenn beide Komponenten in eine Ebene senkrecht projiziert werden, welche senkrecht zur Wicklungsachse ausgerichtet ist. Die Drehachse des Verzahnungsteils ist parallel zu dieser Ebene. Die Ebene ist vorzugsweise parallel zur Wicklungsachse der ersten Lage oder der zweiten Lage ausgerichtet.

Bei einer vorteilhaften Ausgestaltung ist die senkrechte Projektion eines Verzahnungsteils des Getriebes in die Wickelebene der ersten Lage beabstandet von der senkrechten Projektion der zweiten Lage in die Wickelebene der ersten Lage. Somit ist die zweite Lage derart zurückgezogen angeordnet, dass ein Verzahnungsteil in den somit zur Verfügung stehenden Raumbereich hineinragen darf. Von Vorteil ist dabei, dass der Innenraum optimal ausgenutzt ist und die erste Lage sowie die zweite Lage möglichst nahe am Verzahnungsteil angeordnet sind, sodass eine Entwärmung möglichst effizient ausführbar ist.

Bei einer vorteilhaften Ausgestaltung ist der kleinste Abstand vom Verzahnungsteil zum Boden des wannenförmigen Gehäuseteils kleiner als der größte Abstand der zweiten Lage vom Boden des wannenförmigen Gehäuseteils,
insbesondere wobei die Drehachse des Verzahnungsteils senkrecht zur Normalenrichtung der Wickelebene ausgerichtet ist,
insbesondere wobei das Gehäuse ein Deckelteil und das wannenförmige Gehäuseteil aufweist, wobei das Deckelteil auf das wannenförmige Gehäuseteil aufgesetzt ist. Von Vorteil ist dabei, dass das Verzahnungsteil nahe an die erste Lage heranragt und somit das vom ersten Verzahnungsteil bewegte Schmieröl direkt entwärmbar ist.

Bei einer vorteilhaften Ausgestaltung ist ein Sensor, insbesondere Leckagesensor, an der Innenseite der Hülse angeordnet,
insbesondere sodass der Sensor in Gravitationsrichtung am tiefsten Punkt der Innenseite der Hülse angeordnet ist. Von Vorteil ist dabei, dass eine hohe Sicherheit gegen Leckage erreichbar ist. Dabei ist der Sensor durch die vordefinierte Drehlage der Hülse an der tiefsten Stelle der Innenseite anordenbar ist.

Weitere Vorteile ergeben sich aus den Unteransprüchen.

Die Erfindung wird nun anhand von schematischen Abbildungen näher erläutert:

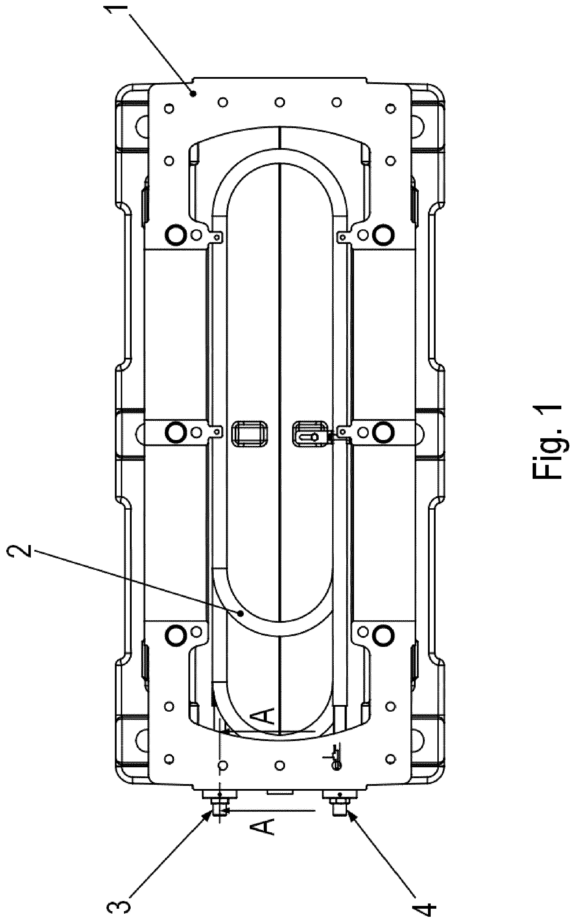

In der Figur 1 ist ein Gehäuseteil 1 eines erfindungsgemäßen Getriebes mit eingelegter Rohrleitung 2 in Draufsicht dargestellt.

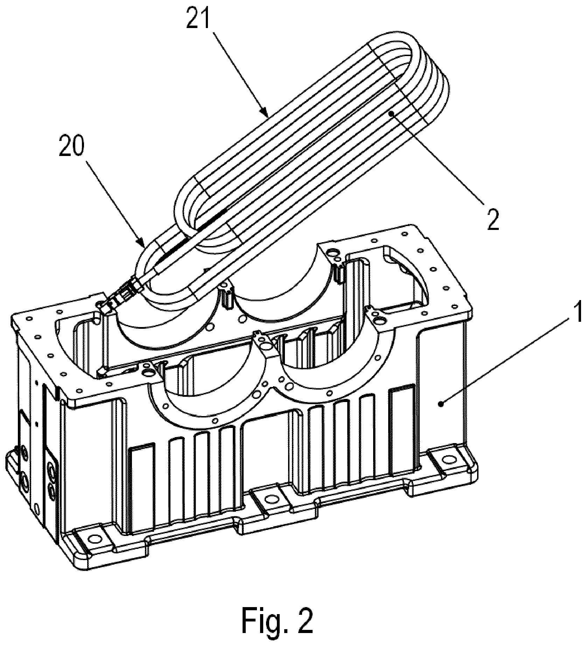

In der Figur 2 ist die als zweilagige Wicklung ausgebildete Rohrleitung explodiert zum Gehäuseteil 1 dargestellt.

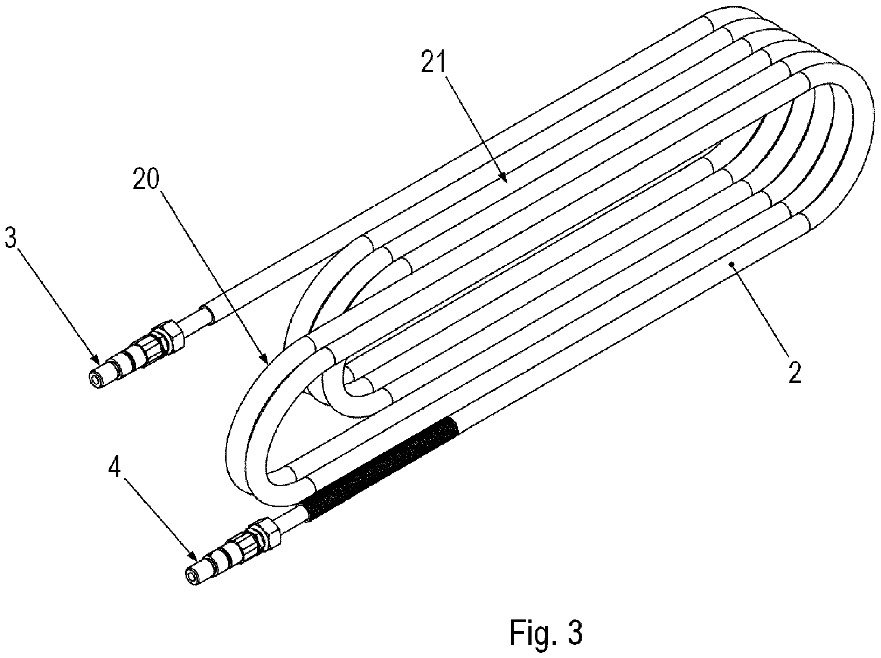

In der Figur 3 ist die zweilagige Wicklung in Schrägansicht dargestellt.

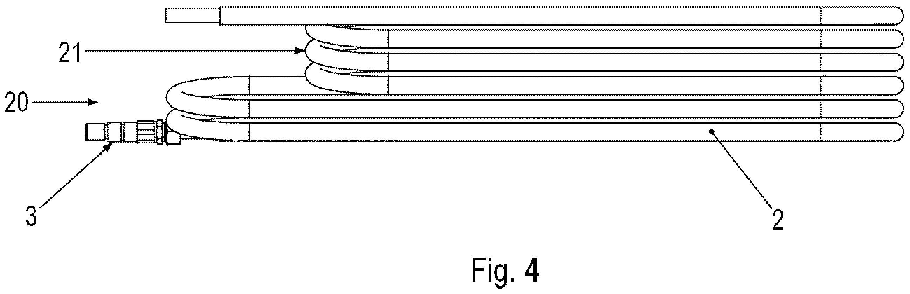

In der Figur 4 ist die zweilagige Wicklung in Seitenansicht dargestellt.

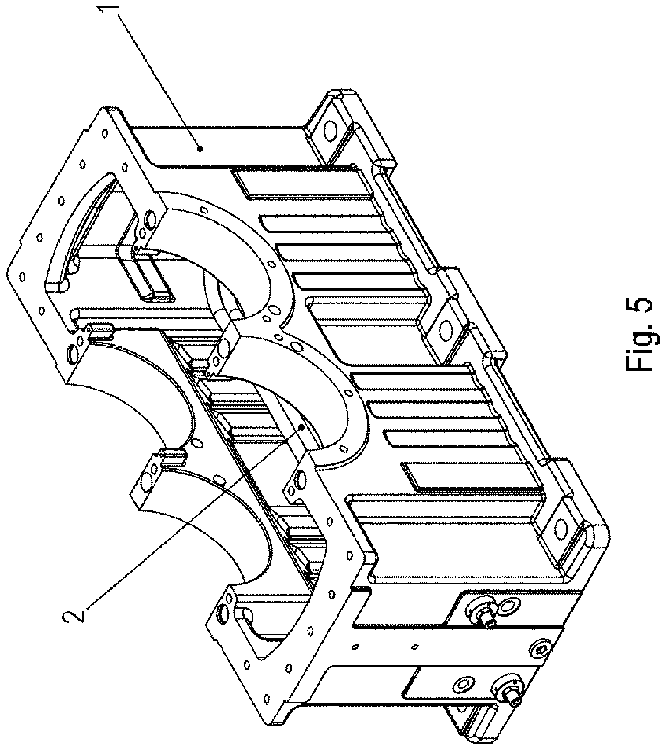

In der Figur 5 ist das Gehäuseteil 1 in Schrägansicht dargestellt.

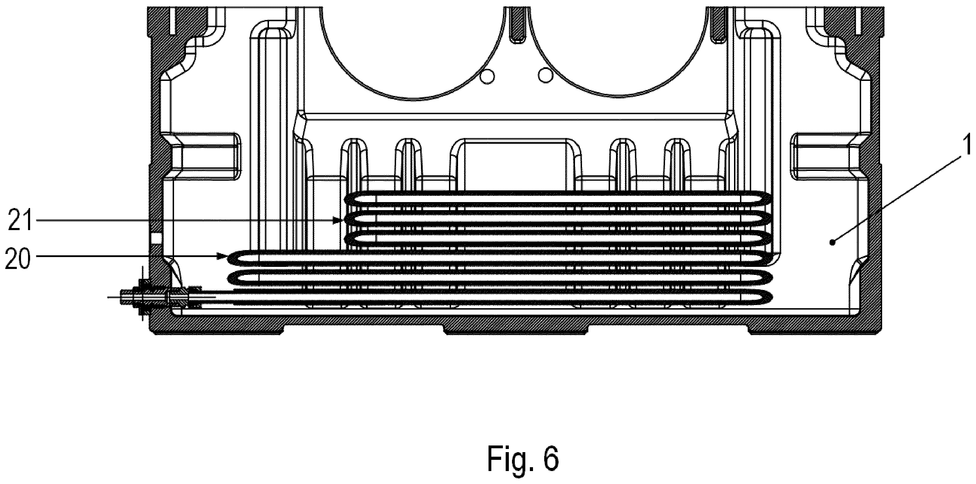

In der Figur 6 ist das Gehäuseteil 1 angeschnitten in Seitenansicht dargestellt.

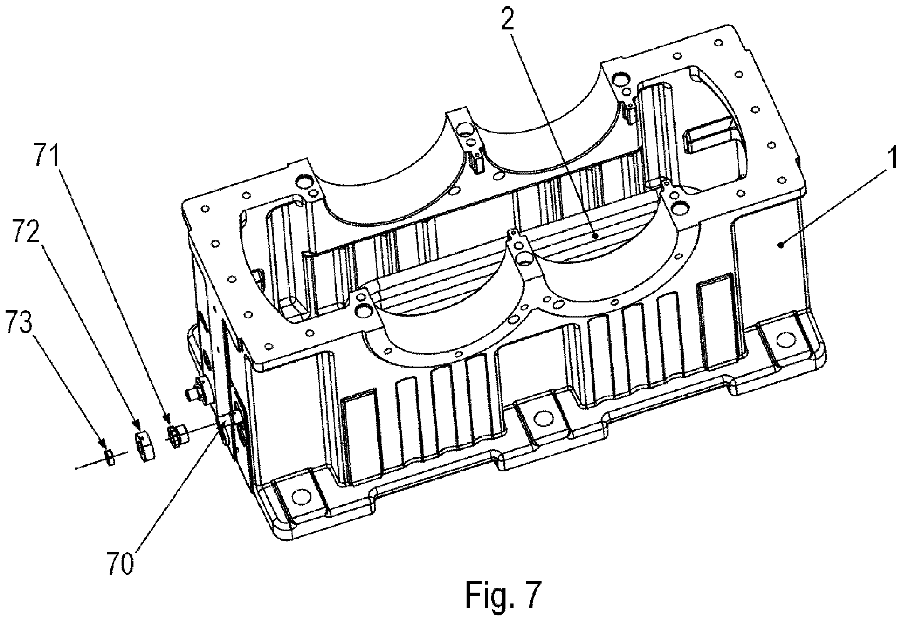

In der Figur 7 ist das Gehäuseteil 1 in Schrägansicht dargestellt, wobei ein Anschluss 4 zumindest teilweise explodiert dargestellt ist.

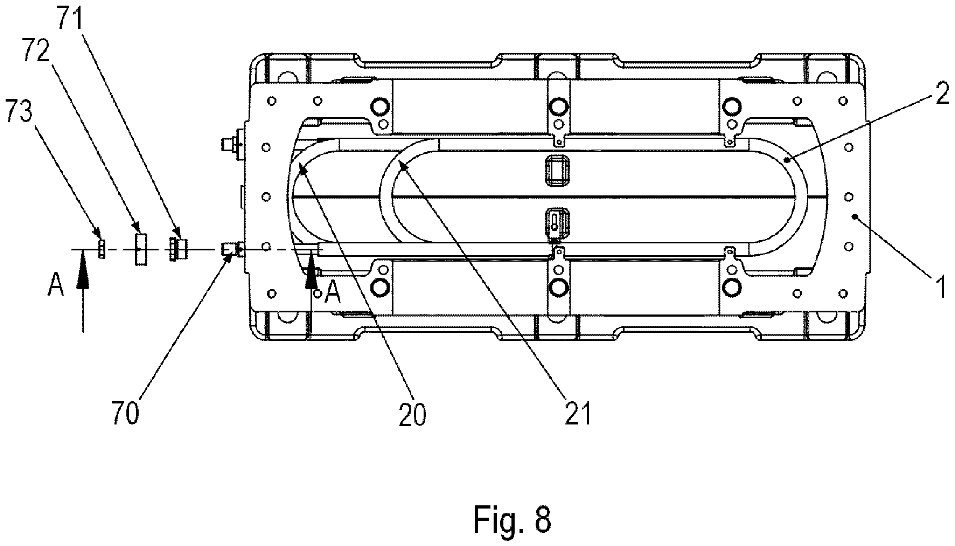

In der Figur 8 ist das Gehäuseteil 1 in Draufsicht dargestellt.

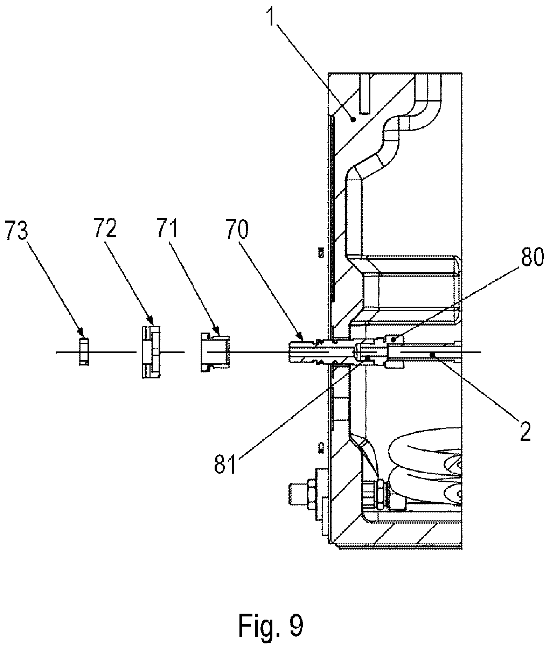

In der Figur 9 ist ein Querschnitt des Gehäuseteils 1 im Bereich des zumindest teilweise explodierten Anschlusses 4 dargestellt.
In der Figur 10 ist die Rohrleitung 2 mit explodiertem Anschluss in Schrägansicht dargestellt.

Wie in den Figuren dargestellt, weist das Getriebe ein Gehäuseteil 1 auf, an dessen erster Seite, insbesondere Oberseite, eine Öffnung ausgebildet ist, durch welche die als zweilagige Wicklung ausgeführte Rohrleitung 2 einführbar und montierbar ist.

Dabei erstreckt sich eine erste Lage 20 der Wicklung in einer ersten Richtung weiter als eine zweite Lage 21 der Wicklung. Vorzugsweise ist die erste Lage 20 in Gravitationsrichtung unterhalb der zweiten Lage 21 angeordnet. Somit ist eine verbesserte Entwärmung des Gehäuseteils 1 erreichbar, da die ins Gehäuseteil 1 einströmende Verlustwärme sich schnell über das gesamte Gehäuseteil 1 verteilt und die erste Lage 20 näher an der Innenwand des Gehäuseteils 1, insbesondere der Unterseite des Gehäuseteils 1, angeordnet ist als die zweite Lage 21.

Die Rohrleitung ist mittels eines durch das Gehäuseteil 1 durchgehenden, ersten Anschlusses 3, insbesondere Einlass, und mittels eines durch das Gehäuseteil 1 durchgehenden, zweiten Anschlusses 4, insbesondere Auslass, von einer außerhalb des Getriebes angeordneten Pumpe mit einem Kühlmedium versorgbar, insbesondere Wasser.

Das Gehäuseteil 1 ist aus Metall, insbesondere aus einem Stahlguss, ausgeführt. Der Innenraum des Getriebes ist zumindest teilweise mit einem Schmieröl gefüllt, welches die Lager des Getriebes sowie die miteinander im Eingriff stehenden Verzahnungsbereiche versorgt.

Zur Vereinfachung der Montage der Rohrleitung 2 sind die Anschlüsse (3, 4) von außen abgedichtet montierbar.

Hierzu weist das Gehäuseteil 1 für jeden Anschluss (3, 4) eine durchgehende Bohrung auf, welche ein von außen eingebrachtes, nicht vollständig durchgehendes Gewinde aufweist.

In dieses Gewinde ist von außen kommend eine, mit einem Außengewinde versehene, hohl ausgeführte Buchse 71 eingeschraubt, welche dabei auf ein durch die Bohrung hindurchragendes Verbindungsstück 70 aufgesteckt ist.

Vorzugsweise ist die Buchse 71 aus einem elastischeren Material, insbesondere Kunststoff, ausgeführt als das hohl ausgeführte Verbindungsstück 70. Insbesondere ist das Verbindungsstück 70 aus Metall ausgeführt.

Somit ist die Buchse 71 elastisch verformt und dichtet zwischen dem Verbindungsstück 70 und dem Gehäuseteil 1 ab. Insbesondere bewirkt diese Abdichtung Öldichtigkeit, insbesondere so, dass das Schmieröl des Getriebes nicht in die äußere Umgebung austreten kann.

Das Verbindungsstück 70 ragt durch das Gehäuseteil 1 sowie durch die Buchse 71 sowie durch die Hülse 72 hindurch, insbesondere in Achsrichtung, insbesondere also parallel zur Schraubrichtung der Buchse 71 bzw. der Schraubachsrichtung des Außengewindes der Buchse 71.

Die Hülse 72 ist koaxial zur Buchse 71 und zum Verbindungsstück 70 ausgerichtet und umgibt die Buchse 71 radial, insbesondere in Umfangsrichtung vollständig.

Der aus dem Gehäuseteil 1 axial herausragende Bereich der Buchse 71 ist von der Hülse 72 umgeben und somit geschützt.

Die Hülse 72 ist vorzugsweise aus Metall gefertigt.

Die Buchse 71 ist gegen die Innenseite der Hülse 72 angestellt.

Zur zusätzlichen axialen Fixierung und Sicherung ist eine Mutter 73 mit ihrem Innengewinde auf einen mit einem Außengewinde versehenen Bereich des Verbindungsstücks 70 aufgeschraubt und gegen die Hülse 72 axial angestellt. Somit wird die Hülse 72 von der Mutter 73 an das Gehäuseteil 1 angedrückt.

Das Verbindungsstück 70 ist vorzugsweise aus Metall ausgeführt.

Zur Bildung eines Anschlusses ist auf die Rohrleitung 2 eine Überwurfmutter 80 mit Adapterteil 81, insbesondere Stutzen, aufgesteckt.

Die Rohrleitung 2 ist in einen konischen Bereich einer Ausnehmung des Adapterteils 81, insbesondere Stutzens, eingesteckt, wobei mittels des konischen Bereichs der lichte Innendurchmesser des Adapterteils 81 mit zunehmender Einstecktiefe der Rohrleitung 2 abnimmt. An seinem Außenumfang weist der konische Bereich des Adapterteils 81 einen Gewindeabschnitt auf, auf welchen die Überwurfmutter 80 mit ihrem Innengewinde aufgeschraubt ist, sodass die Überwurfmutter 80 den konischen Bereich verformt, insbesondere und dadurch auf die Rohrleitung aufschrumpft.

Die Ausnehmung des Adapterteils 81 ist in axialer Richtung durchgehend ausgebildet. Das Adapterteil 81 ist mit seinem von der Rohrleitung abgewandten, mit einem Außengewinde versehenen Endbereich in eine Innengewindebohrung des Verbindungsstücks 70 eingeschraubt.

Auf diese Weise ist es also ermöglicht, die Rohrleitung 2 im Innenraum in einfacher Weise zu verbinden. Dabei muss nur das Adapterteil 81 in das Verbindungsstück eingeschraubt werden und die Rohrleitung in das Adapterteil 81 eingesteckt werden. Mittels der Überwurfmutter 80 ist durch Anschrauben die Verbindung abgedichtet, insbesondere unter zusätzlicher Verwendung eines Dichtrings oder sogar Schneidrings, der von der Überwurfmutter 80 umgeben ist.

Dadurch, dass die Buchse 71 an der vom Adapterteil 81 abgewandten Seite des Gehäuseteils 1 radial hervorragt, ist ein vollständiges Hineinwandern der Buchse 71 in die Bohrung des Gehäuseteils verhindert. Die Buchse 71 ist von der Hülse 72 gehäusebildend geschützt.

Erfindungsgemäß ist also das Ende der Rohrleitung schon vor Einlegen ins Getriebe mit dem Adapterteil 81 und der Überwurfmutter 80 verbindbar. Nach dem Einlegen der Rohrleitung 2 in das Getriebe ist kein Schrauben im Innenraum des Getriebes notwendig. Nur außerhalb des Getriebes wird ein Schrauben benötigt. Daher ermöglicht die Erfindung, dass der Anschluss extrem nahe am Boden des wannenförmigen Gehäuseteils anordenbar ist, insbesondere nahe einer unteren seitlichen Ecke des Gehäuseteils 1. Denn eine Betätigung mit einem Werkzeug, wie Maulschlüssel, ist nicht nötig. Somit ist die Bohrung sehr nahe an den Boden oder eine andere Seitenwand anordenbar.

Bei weiteren erfindungsgemäßen Ausführungsbeispielen wird das Adapterteil 81, insbesondere der Stutzen, und/oder die Überwurfmutter 80 aus Kunststoff ausgeführt. Somit ist durch elastisches Vorspannen eine verbesserte Dichtigkeit erreichbar.

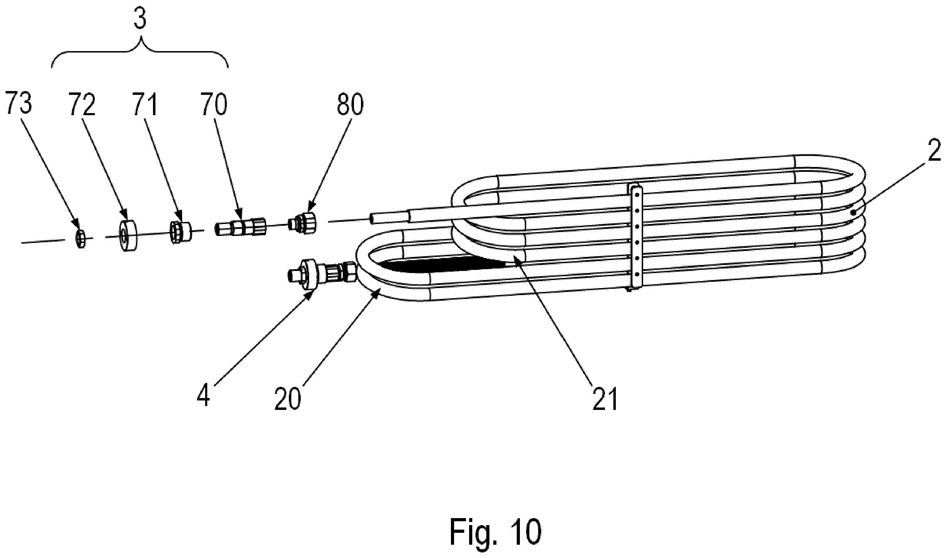

In Figur 10 ist klar erkennbar, dass die zweite Lage 21 weniger Raumbereich beansprucht als die erste Lage 20. Somit ist dieser freie Raumbereich, welcher sich oberhalb des in der Figur 10 geschwärzten Bereichs befindet, von einem Zahnrad nutzbar, das dort hineinragt. Auf diese Weise ist eine effiziente Raumausnutzung ermöglicht.

Bei weiteren erfindungsgemäßen Ausführungsbeispielen ist die Hülse 72 mit dem Verbindungsstück 70 mittels zumindest eines ersten Schraubteils, insbesondere Gewindestifts, drehfest verbunden, insbesondere indem das erste Schraubteil in eine radial gerichtete Gewindebohrung eingeschraubt ist und in eine radial gerichtete Vertiefung, insbesondere Gewindebohrung, des Verbindungsstücks 70 hineinragt, insbesondere und zumindest teilweise eingeschraubt ist.

Außerdem ist ein zweites Schraubteil vorgesehen, welches in eine axial gerichtete Gewindebohrung der Hülse 71 eingeschraubt ist und zumindest teilweise in eine axial gerichtete Gewindebohrung des Gehäuseteils 1 eingeschraubt ist. Diese axial gerichtete Gewindebohrung ist in Umfangsrichtung von der oben genannten radial gerichteten Gewindebohrung beabstandet.

Somit ist die Hülse 71 einerseits am Gehäuseteil 1 mittels des ersten Schraubteils angeschraubt und mittels des zweiten Schraubteils drehfest verbunden mit dem Verbindungsstück 70.

Beim Einschrauben des ersten Schraubteils drückt die Hülse 72 auf die Buchse 71. Insbesondere ist die Mutter 73 dann nicht notwendig.

Bei weiteren erfindungsgemäßen Ausführungsbeispielen ist ein Sensor, insbesondere Leckagesensor, an der Innenseite der Hülse angeordnet. Mittels des Sensors ist das Austreten von Kühlmittel oder Schmiermittel aus der Bohrung des Gehäuseteils 1 detektierbar. Denn die Hülse 72 umgibt den aus dem Gehäuseteil 1 hervorragenden Bereich der Buchse 71 und ist von der Mutter 73 an das Gehäuseteil angedrückt. Vorzugsweise ist bei Verwendung des obengenannten zweiten Schraubteils die Drehlage der Hülse 72 festgelegt. Daher ist auch die Drehlage des Sensors an der Innenseite der Hülse 72 festgelegt. Vorzugsweise wird die Drehlage derart festgelegt, dass der Sensor in Gravitationsrichtung unten in dem von der Hülse 72 umgebenen Bereich angeordnet ist und daher schon die ersten Tropfen bei Leckage direkt detektierbar macht.

### Bezugszeichenliste

1 Gehäuseteil
2 Rohrleitung
3 Anschluss, insbesondere Einlass
4 Anschluss, insbesondere Auslass
20 erste Lage
21 zweite Lage
70 Verbindungsstück
71 Buchse
72 Hülse
73 Mutter
80 Überwurfmutter für Adapterteil 81, insbesondere Stutzen
81 Adapterteil

## Patentansprüche

1. Getriebe mit einem Gehäuseteil (1) und einer **mit einem Adapterteil (81)** des Getriebes **verbundenen** Rohrleitung (2),
wobei das **Gehäuseteil (1)** eine durchgehende, insbesondere durch die Wandung des Gehäuseteils (1) durchgehende, Bohrung aufweist,
**wobei** das Getriebe ein **mit dem Adapterteil (81) verbundenes** Verbindungsstück (70) aufweist,
wobei eine Buchse (71) des Getriebes einen Außengewindebereich aufweist, mit welchem die Buchse (71) in einen Innengewindebereich der Bohrung eingeschraubt ist,
wobei die Buchse (71) auf das Verbindungsstück (70) aufgesteckt und/oder zwischen dem Verbindungsstück (70) und dem Gehäuseteil (1) angeordnet ist,
wobei das Verbindungsstück (70) hohl ausgeführt ist und/oder eine axial durchgehende Ausnehmung aufweist,
wobei die axiale Richtung parallel zur Richtung der Schraubachse des Außengewindebereichs und/oder Innengewindebereichs ausgerichtet ist,
**dadurch gekennzeichnet, dass**
**das Verbindungsstück (70) durch das Gehäuseteil (1), insbesondere durch die Wandung des Gehäuseteils (1), hindurchragt und/oder beidseitig aus dem Gehäuseteil (1), insbesondere aus der Wandung des Gehäuseteils (1), hervorragt.**

2. Getriebe nach Anspruch 1,
**dadurch gekennzeichnet, dass**
der Abstand zwischen der Bohrung und dem Boden des wannenförmigen Gehäuseteils (1) kleiner als fünfzehn Prozent, insbesondere kleiner als zehn Prozent, des Innendurchmessers der Bohrung beträgt
und/oder
der Abstand zwischen der in einen ersten, insbesondere ebenen, Wandbereich eingebrachten Bohrung und einem zum ersten Wandbereich senkrecht ausgerichteten, zweiten, insbesondere ebenen, Wandbereich des wannenförmigen Gehäuseteils (1), kleiner als fünfzehn Prozent, insbesondere kleiner als zehn Prozent, des Innendurchmessers der Bohrung beträgt.

3. Getriebe nach Anspruch 1 oder 2,
**dadurch gekennzeichnet, dass**
die Buchse (71) aus einem elastischeren Material als das Verbindungsstück (70) ausgeführt ist,
insbesondere wobei die Buchse (71) aus Kunststoff gefertigt ist und/oder das Verbindungsstück (70) aus Metall gefertigt ist.

4. Getriebe nach einem der vorangegangenen Ansprüche,
**dadurch gekennzeichnet, dass**
das Verbindungsstück (70) ein Innengewinde aufweist, in welches das Adapterteil (81),
insbesondere Stutzen, eingeschraubt ist,
wobei das hohl ausgeführte Adapterteil (81), insbesondere Stutzen, einen innenkonischen Bereich aufweist, in welchem ein Ende der Rohrleitung (2) aufgenommen ist und/oder in welches das Ende der Rohrleitung (2) eingesteckt ist,
insbesondere wobei eine Überwurfmutter (80) auf die Außenseite des innenkonischen Bereichs des Adapterteils (81), insbesondere Stutzens, aufgeschraubt ist, sodass der innenkonische Bereich elastisch verformt ist, insbesondere auf das Ende der Rohrleitung (2) aufgeschrumpft ist,
insbesondere wobei die Überwurfmutter (80) einen Dichtring oder eine Schneidklemme umgibt, welche an der Rohrleitung (2) anliegt.

5. Getriebe nach einem der vorangegangenen Ansprüche,
**dadurch gekennzeichnet, dass**
die Buchse (71) aus dem Gehäuseteil (1) hervorragt, insbesondere an der vom Adapterteil (81) und/oder von der Rohrleitung (2) abgewandten Seite des Gehäuseteils (1),
wobei eine Hülse (72) **des Getriebes** auf das Verbindungsstück (70) aufgesteckt ist und am Gehäuseteil (1) anliegt.

6. Getriebe nach **Anspruch 5,**
**dadurch gekennzeichnet, dass**
die Hülse (72) den aus dem Gehäuseteil (1) hervorragenden Bereich der Buchse (71) insbesondere radial umgibt,
und/oder dass
in dem von der Hülse (72) in axialer Richtung überdeckten Bereich der **auf die Schraubachse bezogene,** von der Hülse (72) überdeckte Radialabstandsbereich den von der Buchse (71), insbesondere in dem aus dem Gehäuseteil (1) hervorragenden Bereich der Buchse (71), überdeckten Radialabstandsbereich umfasst /oder von diesem beabstandet ist.

7. Getriebe **nach Anspruch 5 oder 6,**
**dadurch gekennzeichnet, dass**
der von der Hülse (72) in axialer Richtung überdeckte Bereich mit dem von der Buchse (71) in axialer Richtung überdeckten Bereich überlappt, insbesondere echt überlappt.

8. Getriebe **nach Anspruch 5, 7 oder 6,**
**dadurch gekennzeichnet, dass**
die Hülse (72) mit dem Verbindungsstück (70) mittels zumindest eines ersten Schraubteils, insbesondere Gewindestifts, drehfest verbunden ist,
wobei das erste Schraubteil in eine radial gerichtete Gewindebohrung der Hülse (72) zumindest teilweise eingeschraubt ist und in eine radial gerichtete Vertiefung des Verbindungsstücks (70) hineinragt.

9. Getriebe **nach Anspruch 8,**
**dadurch gekennzeichnet, dass**
wobei ein zweites Schraubteil vorgesehen ist, welches in eine axial gerichtete Gewindebohrung der Hülse (72) zumindest teilweise eingeschraubt ist und zumindest teilweise in eine axial gerichtete Gewindebohrung des Gehäuseteils (1) eingeschraubt ist.

10. Getriebe **nach Anspruch 9,**
**dadurch gekennzeichnet, dass**
das erste Schraubteil vom zweiten Schraubteil in Umfangsrichtung beabstandet ist,

11. Getriebe **nach Anspruch 5 oder 6,**
**dadurch gekennzeichnet, dass**
der aus dem Gehäuseteil (1) hervorragende Bereich der Buchse (71) einen Außendurchmesser aufweist, welcher größer als der lichte Innendurchmesser der Gewindebohrung des Gehäuseteils (1) ist.

12. Getriebe nach einem der Ansprüche **5 bis 8,**
**dadurch gekennzeichnet, dass**
eine auf einen Außengewindebereich des Verbindungsstücks aufgeschraubte Mutter (73) **des Getriebes** die Hülse (72) ans Gehäuseteil (1) andrückt, insbesondere sodass die Buchse (71) ebenfalls an das Gehäuseteil (1) angedrückt wird und elastisch verformt wird.

13. Getriebe nach einem der Ansprüche **2 oder 3 bis 12 mit Rückbezug auf Anspruch 2, dadurch gekennzeichnet, dass**
die Rohrleitung (2) im Getriebe als zumindest zweilagige Wicklung, insbesondere ebene Wicklung und/oder Flachwicklung, angeordnet ist,
wobei die erste Lage (20) der Wicklung senkrecht zur Wicklungsachse sich weiter erstreckt als die zweite Lage (21) der Wicklung,
insbesondere wobei die erste Lage (20) näher zum Boden des wannenförmig ausgebildeten Gehäuseteils (1) angeordnet ist als die zweite Lage (21), insbesondere sodass die von der ersten Lage (20) umwickelte Fläche größer ist als die von der zweiten Lage (21) umwickelte Fläche, insbesondere wobei die erste Lage (20) zumindest zwei Windungen aufweist und die zweite Lage (21) ebenfalls zumindest zwei Windungen aufweist.

14. Getriebe **nach Anspruch 13,**
**dadurch gekennzeichnet, dass**
die senkrechte Projektion eines Verzahnungsteils des Getriebes in die Wickelebene der ersten Lage (20) der Wicklung beabstandet ist von der senkrechten Projektion der zweiten Lage (21) der Wicklung in die Wickelebene der ersten Lage (20)
und/oder dass
der kleinste Abstand vom Verzahnungsteil zum Boden des wannenförmigen Gehäuseteils (1) kleiner ist als der größte Abstand der zweiten Lage (21) vom Boden des wannenförmigen Gehäuseteils (1),
insbesondere wobei die Drehachse des Verzahnungsteils senkrecht zur Normalenrichtung der Wickelebene ausgerichtet ist,
insbesondere wobei das Gehäuse ein Deckelteil und das wannenförmige Gehäuseteil (1) aufweist, wobei das Deckelteil auf das wannenförmige Gehäuseteil (1) aufgesetzt ist.

15. Getriebe nach einem der **Ansprüche 5 bis 8 oder 12,**
**dadurch gekennzeichnet, dass**
ein Sensor, insbesondere Leckagesensor, an der Innenseite der Hülse (72) angeordnet ist,
insbesondere sodass der Sensor in Gravitationsrichtung am tiefsten Punkt der Innenseite der Hülse (72) angeordnet ist.

## Claims

1. A gear unit with a housing part (1), and piping (2) which is connected to an adapter part (81) of the gear unit,
wherein the housing part (1) has a continuous bore, in particular one which passes through the wall of the housing part (1),
wherein the gear unit has a connecting piece (70) connected to the adapter part (81),
wherein a bush (71) of the gear unit has an external thread region by which the bush (71) is screwed into an internal thread region of the bore,
wherein the bush (71) is mounted on the connecting piece (70) and/or is arranged between the connecting piece (70) and the housing part (1),
wherein the connecting piece (70) is made hollow and/or has an axially continuous cutout,
wherein the axial direction is oriented parallel to the direction of the screwing axis of the external thread region and/or internal thread region,
**characterised in that**
the connecting piece (70) protrudes through the housing part (1), in particular through the wall of the housing part (1), and/or protrudes on both sides out of the housing part (1), in particular out of the wall of the housing part (1).

2. A gear unit according to claim 1,
**characterised in that**
the distance between the bore and the bottom of the trough-shaped housing part (1) is less than fifteen percent, in particular less than ten percent, of the internal diameter of the bore
and/or
the distance between the bore formed in a first, in particular planar, wall region and a second, in particular planar, wall region of the trough-shaped housing part (1) which is oriented perpendicularly to the first wall region is less than fifteen percent, in particular less than ten percent, of the internal diameter of the bore.

3. A gear unit according to claim 1 or 2,
**characterised in that**
the bush (71) is made of a more elastic material than the connecting piece (70),
in particular with the bush (71) being manufactured from plastics material and/or the connecting piece (70) being manufactured from metal.

4. A gear unit according to one of the preceding claims,
**characterised in that**
the connecting piece (70) has an internal thread into which the adapter part (81), in particular pipe connector, is screwed in,
with the hollow adapter part (81), in particular pipe connector, having an internally conical region in which one end of the piping (2) is received and/or into which the end of the piping (2) is inserted,
in particular with a union nut (80) being screwed onto the outer side of the internally conical region of the adapter part (81), in particular pipe connector, so that the internally conical region is elastically deformed, in particular is shrunk onto the end of the piping (2),
in particular with the union nut (80) surrounding a sealing ring or a cutting clamp which lies against the piping (2).

5. A gear unit according to one of the preceding claims,
**characterised in that**
the bush (71) protrudes out of the housing part (1), in particular on that side of the housing part (1) which faces away from the adapter part (81) and/or from the piping (2),
with a sleeve (72) of the gear unit being mounted on the connecting piece (70) and lying against the housing part (1).

6. A gear unit according to claim 5,
**characterised in that**
the sleeve (72), in particular radially, surrounds that region of the bush (71) which protrudes out of the housing part (1),
and/or **in that**
in the region covered in the axial direction by the sleeve (72) the radial distance region related to the screwing axis and covered by the sleeve (72) encompasses the radial distance region covered by the bush (71), in particular **in that** region of the bush (71) which protrudes out of the housing part (1), or is spaced apart therefrom.

7. A gear unit according to claim 5 or 6,
**characterised in that**
the region covered in the axial direction by the sleeve (72) overlaps, in particular overlaps truly, with the region covered in the axial direction by the bush (71).

8. A gear unit according to claim 5, 7 or 6,
**characterised in that**
the sleeve (72) is connected non-rotatably to the connecting piece (70) by means of at least a first screwing part, in particular threaded pin,
with the first screwing part being screwed at least partly into a radially directed threaded bore in the sleeve (72) and protruding into a radially directed indentation in the connecting piece (70).

9. A gear unit according to claim 8,
**characterised in that**
with a second screwing part being provided which is screwed at least partly into an axially directed threaded bore in the sleeve (72) and screwed at least partly into an axially directed threaded bore in the housing part (1).

10. A gear unit according to claim 9,
**characterised in that**
the first screwing part is spaced apart from the second screwing part in the peripheral direction.

11. A gear unit according to claim 5 or 6,
**characterised in that**
that region of the bush (71) which protrudes out of the housing part (1) has an external diameter which is greater than the clear internal diameter of the threaded bore of the housing part (1).

12. A gear unit according to one of claims 5 to 8,
**characterised in that**
a nut (73) of the gear unit screwed onto an external thread region of the connecting piece presses the sleeve (72) against the housing part (1), in particular so that the bush (71) is likewise pressed against the housing part (1) and is elastically deformed.

13. A gear unit according to one of claims 2, or 3 to 12 with reference to claim 2, **characterised in that**
the piping (2) is arranged in the gear unit as at least a two-layer winding, in particular planar winding and/or flat winding,
with the first layer (20) of the winding extending further perpendicularly to the winding axis than the second layer (21) of the winding,
in particular with the first layer (20) being arranged closer to the bottom of the trough-shaped housing part (1) than the second layer (21), in particular so that the face wound by the first layer (20) is larger than the face wound by the second layer (21), in particular
with the first layer (20) having at least two windings and the second layer (21) likewise having at least two windings

14. A gear unit according to claim 13,
**characterised in that**
the perpendicular projection of a gearing part of the gear unit into the winding plane of the first layer (20) of the winding is spaced apart from the perpendicular projection of the second layer (21) of the winding into the winding plane of the first layer (20)
and/or **in that**
the shortest distance from the gearing part to the bottom of the trough-shaped housing part (1) is shorter than the greatest distance of the second layer (21) from the bottom of the trough-shaped housing part (1),
in particular with the axis of rotation of the gearing part being oriented perpendicularly to the normal direction of the winding plane,
in particular with the housing having a cover part and the trough-shaped housing part (1), with the cover part being placed on the trough-shaped housing part (1).

15. A gear unit according to one of claims 5 to 8 or 12,
**characterised in that**
a sensor, in particular leakage sensor, is arranged on the inner side of the sleeve (72),
in particular so that the sensor is arranged in the direction of gravity at the lowest point of the inner side of the sleeve (72).

## Revendications

1. Engrenage comprenant un élément de carter (1) et une conduite (2) reliée à un élément adaptateur (81) de l'engrenage, lequel élément de carter (1) présente un perçage traversant, en particulier traversant la paroi de l'élément de carter (1), l'engrenage comprenant une pièce de liaison (70) reliée à l'élément adaptateur (81), la douille (71) de l'engrenage présentant une zone filetée extérieure, avec laquelle la douille (71) est vissée dans une zone filetée intérieure du perçage, la douille (71) étant emmanchée sur la pièce de liaison (70) et/ou agencée entre la pièce de liaison (70) et l'élément de carter (1), la pièce de liaison (70) étant réalisée creuse et/ou présentant un évidement axial traversant, la direction axiale étant orientée parallèlement à la direction de l'axe de vissage de la zone filetée extérieure et/ou de la zone filetée intérieure, **caractérisé en ce que** la pièce de liaison (70) traverse l'élément de carter (1), en particulier la paroi de l'élément de carter (1), et/ou dépasse des deux côtés de l'élément de carter (1), en particulier de la paroi de l'élément de carter (1).

2. Engrenage selon la revendication 1, **caractérisé en ce que** la distance entre le perçage et le fond de l'élément de carter en forme de cuve (1) est inférieure à quinze pour cent, en particulier inférieure à dix pour cent du diamètre intérieur du perçage et/ou la distance entre le perçage introduit dans une première zone de paroi, en particulier plane, et une seconde zone de paroi, en particulier plane, de l'élément de carter en forme de cuve (1), orientée perpendiculairement à la première zone de paroi, est inférieure à quinze pour cent, en particulier inférieure à dix pour cent du diamètre intérieur du perçage.

3. Engrenage selon la revendication 1 ou 2, **caractérisé en ce que** la douille (71) est réalisée dans un matériau plus élastique que la pièce de liaison (70), en particulier la douille (71) étant fabriquée en matière plastique et/ou la pièce de liaison (70) étant fabriquée en métal.

4. Engrenage selon l'une des revendications précédentes, **caractérisé en ce que** la pièce de liaison (70) présente un filetage intérieur, dans lequel l'élément adaptateur (81), en particulier l'embout, est vissé,
lequel élément adaptateur (81) réalisé creux, en particulier l'embout, présente une zone intérieure conique, dans laquelle une extrémité de la conduite (2) est reçue et/ou dans laquelle l'extrémité de la conduite (2) est insérée,
en particulier un écrou-raccord (80) étant vissé sur la face externe de la zone intérieure conique de l'élément adaptateur (81), en particulier de l'embout, de sorte que la zone intérieure conique est déformée de manière élastique, en particulier frettée sur l'extrémité de la conduite (2),
en particulier l'écrou-raccord (80) entourant un joint d'étanchéité ou une bague de serrage, lesquels sont appliqués à la conduite (2).

5. Engrenage selon l'une des revendications précédentes, **caractérisé en ce que**
la douille (71) dépasse de l'élément de carter (1), en particulier du côté de l'élément de carter (1) opposé à l'élément adaptateur (81) et/ou à la conduite (2),
un manchon (72) de l'engrenage étant emmanché sur la pièce de liaison (70) et étant appliqué à l'élément de carter (1).

6. Engrenage selon la revendication 5, **caractérisé en ce que** le manchon (72) entoure en particulier radialement la zone de la douille (71) dépassant de l'élément de carter (1),
et/ou
**en ce que** dans la zone recouverte en direction axiale par le manchon (72), la zone de distance radiale, par rapport à l'axe de vissage, recouverte par le manchon (72), comprend la zone de distance radiale recouverte par la douille (71), en particulier dans la zone de la douille (71) dépassant de l'élément de carter (1), ou en est espacée.

7. Engrenage selon la revendication 5 ou 6, **caractérisé en ce que** la zone recouverte en direction axiale par le manchon (72) chevauche la zone recouverte en direction axiale par la douille (71), en particulier chevauche réellement.

8. Engrenage selon la revendication 5, 7 ou 6, **caractérisé en ce que** le manchon (72) est relié de manière solidaire en rotation à la pièce de liaison (70) au moyen d'au moins un premier élément de vissage, en particulier un goujon fileté, le premier élément de vissage étant au moins partiellement vissé dans un trou taraudé orienté radialement du manchon (72) et faisant saillie dans un évidement orienté radialement de la pièce de liaison (70).

9. Engrenage selon la revendication 8, **caractérisé en ce qu'**un second élément de vissage est prévu, lequel est au moins partiellement vissé dans un trou taraudé orienté axialement du manchon (72) et au moins partiellement vissé dans un trou taraudé orienté axialement de l'élément de carter (1).

10. Engrenage selon la revendication 9, **caractérisé en ce que** le premier élément de vissage est espacé du second élément de vissage en direction circonférentielle.

11. Engrenage selon la revendication 5 ou 6, **caractérisé en ce que** la zone de la douille (71) dépassant de l'élément de carter (1) présente un diamètre extérieur supérieur au diamètre intérieur libre du trou taraudé de l'élément de carter (1).

12. Engrenage selon l'une des revendications 5 à 8, **caractérisé en ce qu'** un écrou (73) de l'engrenage, vissé sur une zone filetée extérieure de la pièce de liaison, plaque le manchon (72) contre l'élément de carter (1), en particulier de sorte que la douille (71) est également plaquée contre l'élément de carter (1) et déformée de manière élastique.

13. Engrenage selon l'une des revendications 2 ou 3 à 12 avec renvoi à la revendication 2, **caractérisé en ce que** la conduite (2) est agencée dans l'engrenage en tant qu'enroulement au moins à deux couches, en particulier enroulement plan et/ou enroulement plat,
la première couche (20) de l'enroulement s'étendant perpendiculairement à l'axe d'enroulement plus loin que la seconde couche (21) de l'enroulement, en particulier la première couche (20) étant agencée plus près du fond de l'élément de carter en forme de cuve (1) que la seconde couche (21), en particulier de sorte que la surface enroulée par la première couche (20) est plus grande que la surface enroulée par la seconde couche (21), en particulier la première couche (20) présentant au moins deux spires et la seconde couche (21) présentant également au moins deux spires.

14. Engrenage selon la revendication 13, **caractérisé en ce que** la projection perpendiculaire d'un élément denté de l'engrenage dans le plan d'enroulement de la première couche (20) de l'enroulement est espacée de la projection perpendiculaire de la seconde couche (21) de l'enroulement dans le plan d'enroulement de la première couche (20)
et/ou **en ce que**
la plus petite distance de l'élément denté au fond de l'élément de carter en forme de cuve (1) est inférieure à la plus grande distance de la seconde couche (21) au fond de l'élément de carter en forme de cuve (1),
en particulier l'axe de rotation de l'élément denté étant orienté perpendiculairement à la direction normale du plan d'enroulement,
en particulier le carter comprenant un élément de couvercle et l'élément de carter en forme de cuve (1), l'élément de couvercle étant posé sur l'élément de carter en forme de cuve (1).

15. Engrenage selon l'une des revendications 5 à 8 ou 12, **caractérisé en ce qu'** un capteur, en particulier un capteur de fuite, est agencé sur la face interne du manchon (72), en particulier de sorte que le capteur est agencé en direction de la gravité au point le plus bas de la face interne du manchon (72).
